# EUROPEAN PATENT APPLICATION

(11) **EP 4 603 367 A1**
(43) Date of publication of application: **20.08.2025**
(21) Application number: 23903047.1
(22) Date of filing: 05.09.2023
(51) Int. Cl.: B62D 21/00

(54) **AUTOMOBILE SUB-FRAME STRUCTURE, AND STIFFENING COMPONENT FOR AUTOMOBILE SUB-FRAME STRUCTURE**

(30) Priority: 15.12.2022 JP 2022200053
(71) Applicant: JFE Steel Corporation, Tokyo 100-0011 (JP)
(72) Inventor: YAMAGUCHI, Naoki, Tokyo 100-0011 (JP)
(74) Representative: Hoffmann Eitle
(86) International application number: PCT/JP2023/032370
(87) International publication number: WO 2024/127743

(57) **Abstract**

A sub-frame structure 1 of an automobile according to the present invention includes: a pair of right and left side members 3 each of which includes a hollow member extending in a vehicle longitudinal direction and having a substantially rectangular cross section and a suspension arm coupling portion 11; at least one cross member 5 that includes a hollow member extending in a vehicle lateral direction and having a substantially rectangular cross section and that is connected to the side members 3; a curved portion configured to connect each of the side members 3 and the cross member 5; and a stiffening part 9 configured to integrally cover and stiffen a suspension arm coupling portion 11a in each of the side members 3 and a curved ridgeline portion 7a in the curved portion 7 from the suspension arm coupling portion 11a to the cross member 5.

## Description

### Field

The present invention relates to a sub-frame structure of an automobile with improved stiffness and a stiffening part of the sub-frame structure of the automobile.

### Background

There is an automotive body of an automobile which automotive body is provided with a sub-frame that couples a suspension arm and the automotive body. In the sub-frame, right and left ends of a cross member extending in a vehicle lateral direction are generally connected to a pair of right and left side members extending in a vehicle longitudinal direction. Examples of the sub-frame include what is provided with a pair of front and rear cross members and has a hash shape in a top view, and what is provided with one cross member on a vehicle rear side and has an H-shape in the top view. In addition, the side members and the cross member are not limited to be separate parts connected by separate parts, and side members and a cross member may be integrated.

Since the sub-frame is deformed by a load input from the suspension arm during traveling of the vehicle, high stiffness is required. An increase in stiffness of the sub-frame leads to improvement in ride comfort, and improves a value of the automobile. On the other hand, from a viewpoint of energy efficiency of the automobile, the sub-frame is also required to be light.

For a weight reduction of the sub-frame, it is effective to reduce a sheet thickness in a case where the automotive part included in the sub-frame is manufactured by press forming of a sheet material of a metal material (metal sheet). However, since the stiffness generally decreases when the sheet thickness is reduced, there is a trade-off relationship between the increase of the stiffness and the weight reduction of the sub-frame.

In addition, examples of automotive body performance that deteriorates when the sheet thickness of the metal sheet is reduced include crashworthiness (crash worthiness), deformation strength of when a single load is input, fatigue strength, and the like, and these kinds of automotive body performance can be secured by application of a metal sheet having high strength. However, since an elastic coefficient of a general metal sheet hardly changes even when the strength is increased, it cannot be expected that the stiffness of the sub-frame is increased by the increase in the strength of the metal sheet. Thus, some technologies of realizing high stiffness of a sub-frame regardless of strength of a metal sheet have been proposed so far.

For example, Patent Literature 1 and Patent Literature 2 propose technologies of improving stiffness by providing new members inside connection portions between side members and cross members in a sub-frame structure of an automobile which structure is formed in a hash shape by the side members and the cross members. According to Patent Literature 1, the stiffness can be improved by installation of a tubular member connecting an upper surface side and a lower surface side inside each of the side members and the cross members at the connection portions between the side members and the cross members. In addition, according to Patent Literature 2, filling with or installation of a stiffening member that is made of resin and has a columnar portion connecting an upper surface side and a lower surface side is performed inside each of the side members and the cross members at the connection portions between the side members and the cross members, and the stiffness can be improved.

Furthermore, Patent Literature 3 discloses a sub-frame of a front body or a rear body of an automobile which sub-frame includes a reinforcement structure that is configured in such a manner that a charging module can be incorporated and that is to improve torsional stiffness. According to Patent Literature 3, the charging module incorporated in the reinforcement structure is one part of the reinforcement structure, and itself contributes to reinforcement of the sub-frame.

### Citation List

### Patent Literature

Patent Literature 1: Japanese Patent Application Laid-open No. 2020-083018
Patent Literature 2: Japanese Patent Application Laid-open No. 2020-075656
Patent Literature 3: Japanese Patent No. 5822896 Summary

### Technical Problem

In the technologies disclosed in Patent Literature 1 and Patent Literature 2, since the new member (stiffening part) is additionally installed or filled to improve the stiffness of the sub-frame structure, the number of parts increases, and an increase in a manufacturing cost and a decrease in productivity are caused.

Furthermore, in the technology disclosed in Patent Literature 3, although the torsional stiffness of the sub-frame can be improved by installation of the reinforcement structure having shear strength, weight of an automotive body increases.

The present invention has been made to solve the problems described above, and is to provide a sub-frame structure of an automobile and a stiffening part of the sub-frame structure of the automobile, in which stiffness is improved while the number of parts is not increased and an increase in weight is minimized.

### Solution to Problem

A sub-frame structure of an automobile according to the present invention includes: a pair of right and left vehicle longitudinal direction extension portions each of which includes: a hollow member extending in a vehicle longitudinal direction and having a substantially rectangular cross section; and a suspension arm coupling portion; at least one vehicle lateral direction extension portion that includes a hollow member extending in a vehicle lateral direction and having a substantially rectangular cross section; a curved portion configured to connect each of the vehicle longitudinal direction extension portions and the vehicle lateral direction extension portion; and a stiffening part configured to integrally cover and stiffen the suspension arm coupling portion and a curved ridgeline portion of the curved portion from the suspension arm coupling portion to the vehicle lateral direction extension portion.

In the above-described sub-frame structure of the automobile according to the present invention, the stiffening part is configured to also cover a ridgeline portion on a vehicle exterior side of each of the vehicle longitudinal direction extension portions in the suspension arm coupling portion.

In the above-described sub-frame structure of the automobile according to the present invention, the vehicle longitudinal direction extension portions and the vehicle lateral direction extension portion are made of a steel sheet having tensile strength of 590 MPa-grade or more.

A stiffening part according to the present invention for a sub-frame structure of an automobile, the sub-frame structure including: a pair of right and left vehicle longitudinal direction extension portions each of which includes: a hollow member extending in a vehicle longitudinal direction and having a substantially rectangular cross section; and a suspension arm coupling portion; at least one vehicle lateral direction extension portion that includes a hollow member extending in a vehicle lateral direction and having a substantially rectangular cross section; and a curved portion configured to connect each of the vehicle longitudinal direction extension portions and the vehicle lateral direction extension portion, includes: a local stiffening portion configured to cover the suspension arm coupling portion and locally stiffen the suspension arm coupling portion; and a global stiffening portion extending from the local stiffening portion to the vehicle lateral direction extension portion along a curved ridgeline portion of the curved portion and configured to cover the curved ridgeline portion, and globally stiffen the sub-frame structure, wherein the local stiffening portion and the global stiffening portion are integrally formed.

In the above-described stiffening part for the sub-frame structure of the automobile according to the present invention, the local stiffening portion is configured to also cover a ridgeline portion on a vehicle exterior side of each of the vehicle longitudinal direction extension portions in the suspension arm coupling portion. Advantageous Effects of Invention

In the present invention, a stiffening part that integrally covers and stiffens a suspension arm coupling portion and a curved ridgeline portion of a curved portion where a vehicle longitudinal direction extension portion from the suspension arm coupling portion to a vehicle lateral direction extension portion and the vehicle lateral direction extension portion are connected. As a result, a deformation in the curved portion is controlled without an increase in the number of parts or a decrease in productivity, and stiffness of an entire sub-frame structure is improved. In addition, according to the present invention, an improvement in collision strength, deformation strength of when a single load is input, and fatigue strength can also be expected.

### Brief Description of Drawings

[FIG. 1] FIG. 1 is a view for describing a sub-frame structure of an automobile according to an embodiment of the present invention.
[FIG. 2] FIG. 2 is an enlarged view illustrating a stiffening part provided at a portion where a side member that is a vehicle longitudinal direction extension portion and a cross member that is a vehicle lateral direction extension portion are connected in the sub-frame structure of the automobile according to the embodiment of the present invention.
[FIG. 3] FIG. 3 is a view illustrating a stiffening part according to the present invention, stiffness of which stiffening part is to be examined, and a sub-frame structure to which the stiffening part is applied in a first example.
[FIG. 4] FIG. 4 is a view illustrating a conventional stiffening part, stiffness of which is to be examined, and a sub-frame structure to which the stiffening part is applied in a second example.
[FIG. 5] FIG. 5 is a view illustrating a condition in an analysis by a finite element method of calculating the stiffness of the sub-frame structure in the first example ((a) torsional condition, and (b) bending condition).
[FIG. 6] FIG. 6 is a view illustrating a condition in a crashworthiness analysis of calculating crash worthiness of the sub-frame structure in the first example.
[FIG. 7] FIG. 7 is a view for describing a configuration of a sub-frame structure of a conventional automobile. Description of Embodiments

### <Circumstances leading to the invention>

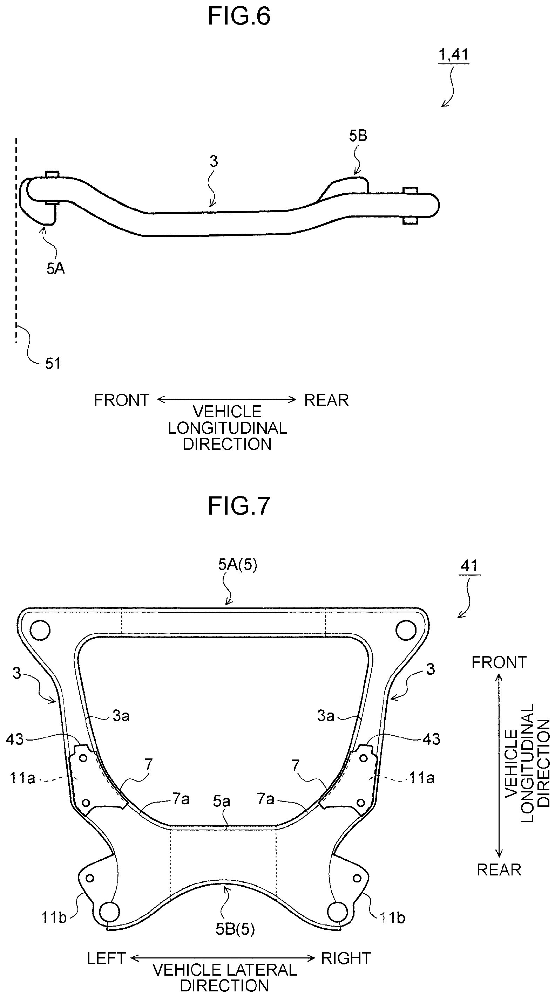

Prior to describing an embodiment of the present invention, the circumstances leading to the present invention will be described on the basis of a sub-frame structure 41 of an automobile which structure is illustrated as an example in FIG. 7 (hereinafter, simply referred to as a "sub-frame structure 41").

The sub-frame structure 41 illustrated in FIG. 7 includes a pair of right and left side members 3 and a pair of front and rear cross members 5 (5A and 5B).

Each of the side members 3 has a hollow member extending in a vehicle longitudinal direction and having a substantially rectangular cross section, and suspension arm coupling portions 11a and 11b to which a suspension arm is coupled are provided at two positions in the vehicle longitudinal direction.

Each of the cross members 5 has a hollow member extending in a vehicle lateral direction and having a substantially rectangular cross section, and is arranged between the pair of right and left side members 3.

In the sub-frame structure 41, each of the side members 3 and the cross member 5B on a vehicle rear side are connected via a curved portion 7. The curved portion 7 is a curved surface on a vehicle interior side, and has a curved ridgeline portion 7a that connects a ridgeline portion 3a on the vehicle interior side of the side member 3 and a ridgeline portion 5a on a vehicle front side of the cross member 5. The sub-frame structure 41 illustrated in FIG. 7 is manufactured by integration of the pair of right and left side members 3 and the pair of front and rear cross members 5, and the curved portions 7 are formed in the side members 3.

The inventor has intensively studied a stiffening portion effective for improving the stiffness of the sub-frame structure 41. As a result, it is found that the stiffness of a sub-frame structure 1 can be efficiently improved by stiffening of the curved ridgeline portions 7a on the vehicle interior side in the curved portions 7 that are curved in an L shape and that connect the side members 3 and the cross member 5B.

Conventionally, a stiffening part 43 that covers the suspension arm coupling portion 11a on the vehicle front side which coupling portion is provided in each of the side members 3 has been used for the suspension arm coupling portion 11a in order to prevent a local deformation of when the suspension arm is coupled. Thus, the inventor has conceived to extend the stiffening part 43 toward a side of the curved ridgeline portion 7a and integrally cover the suspension arm coupling portion 11a and the curved ridgeline portion 7a from the suspension arm coupling portion 11a to the cross member 5B. Then, it is found that it is possible to improve the stiffness of the sub-frame structure without an increase in the number of parts by integrally covering and stiffening the suspension arm coupling portion 11a and the curved ridgeline portion 7a.

The present invention has been made on the basis of such a study, and a specific configuration thereof will be described below.

### <Sub-frame structure of an automobile>

A sub-frame structure of an automobile according to an embodiment of the present invention will be described below.

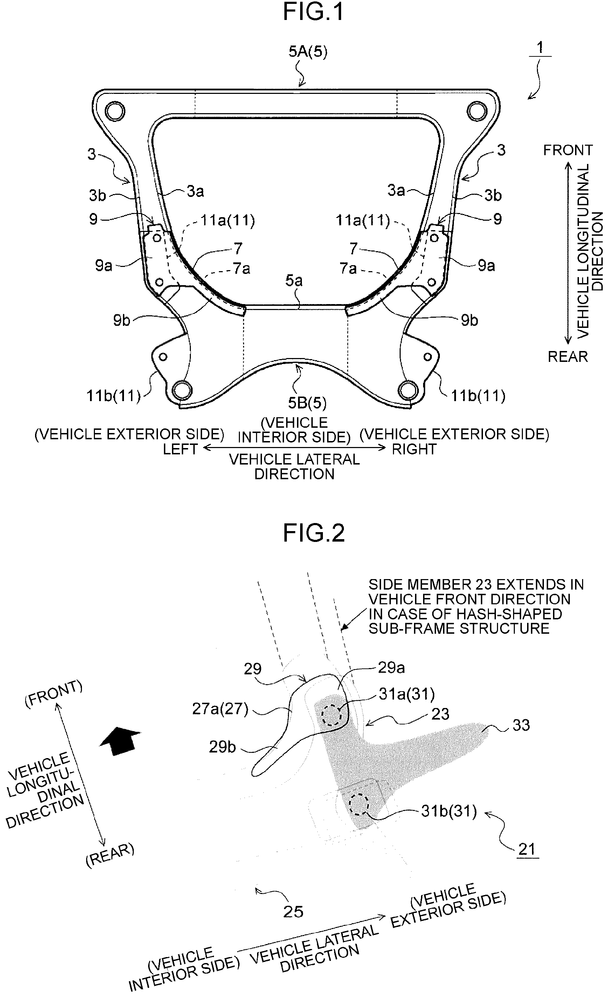

An entire view of a sub-frame structure 1 viewed from a vehicle upper side is illustrated as an example in FIG. 1. The sub-frame structure 1 includes a pair of right and left side members 3 and a pair of front and rear cross members 5 (vehicle front side: 5A, and vehicle rear side: 5B), and the side members 3 and the cross member 5B on the vehicle rear side are connected via curved portions 7. The sub-frame structure 1 is formed in a hash shape in a top view by the pair of right and left side members 3 and the pair of front and rear cross members 5. As illustrated in FIG. 1, the sub-frame structure 1 is provided with stiffening parts 9.

### <<Vehicle longitudinal direction extension portion>>

Each of the side members 3 is a vehicle longitudinal direction extension portion, has a hollow member extending in a vehicle longitudinal direction and having a substantially rectangular cross section, and is provided with suspension arm coupling portions 11 to which a suspension arm is coupled. Each of the side members 3 has ridgeline portions 3a and 3b that are corner portions of the substantially rectangular cross section respectively on a vehicle interior side and a vehicle exterior side in a vehicle lateral direction. In each of the side members 3, suspension arm coupling portions 11a and 11b are provided as the suspension arm coupling portions 11 at front and rear two positions on the vehicle rear side.

### <<Vehicle lateral direction extension portion>>

Each of the cross members 5 is a vehicle lateral direction extension portion and has a hollow member extending in the vehicle lateral direction and having a substantially rectangular cross section. A cross member 5A on the vehicle front side and a cross member 5B on the vehicle rear side are arranged between the pair of right and left side members 3. The cross member 5B on the vehicle rear side has the ridgeline portion 5a that forms a corner portion of the substantially rectangular cross section on the vehicle front side.

### <<Curved portion>>

Each of the curved portions 7 is a portion curved toward the vehicle interior side from the side member 3 to the cross member 5B in a vicinity of the suspension arm coupling portions 11. In a case where the pair of front and rear cross members 5A and 5B is included as in the sub-frame structure 1 illustrated in FIG. 1, the cross member 5B in the vicinity of the suspension arm coupling portions 11 indicates what is on the vehicle rear side. This is because the suspension arm coupling portions 11 are provided on the vehicle rear side in the side member 3.

The curved portion 7 has a curved ridgeline portion 7a that connects the ridgeline portion 3a on the vehicle interior side of the side member 3 and the ridgeline portion 5a on the vehicle front side of the cross member 5B.

In the sub-frame structure 1, the curved portion 7 is formed in the side member 3.

### <<Stiffening part>>

Each of the stiffening parts 9 integrally covers and stiffens the suspension arm coupling portion 11a and the curved ridgeline portion 7a of the curved portion 7 from the suspension arm coupling portion 11a to the cross member 5B.

In the present embodiment, as illustrated in FIG. 1, the stiffening part 9 includes a local stiffening portion 9a and a global stiffening portion 9b.

The local stiffening portion 9a covers the suspension arm coupling portion 11a and locally stiffens the suspension arm coupling portion 11a.

The global stiffening portion 9b extends from the local stiffening portion 9a to the cross member 5B along the curved ridgeline portion 7a of the curved portion 7 and covers the curved ridgeline portion 7a, and globally stiffens the sub-frame structure 1.

A reason why the stiffness is improved in the sub-frame structure 1 of the automobile according to the present embodiment will be described below.

In the sub-frame structure 1, each of the curved portions 7 where the side members 3 and the cross member 5 are connected is a portion in which a uniform shape changes in the vehicle longitudinal direction or the vehicle lateral direction (hereinafter, referred to as a "shape change portion").

When a load is input from the suspension arm coupling portions 11 to such a sub-frame structure 1, a stress distribution is disturbed in the shape change portion as compared with a portion having a uniform shape, stress is locally increased, and stress concentration is likely to be generated. Thus, deformation concentrates on the shape change portion due to the stress concentration and a decrease in the stiffness of the sub-frame structure 1 is caused.

In addition, since each of the side members 3 and the cross members 5 includes the hollow member having the substantially rectangular cross section, in a case where a load of bending or torsion is applied to the sub-frame structure 1, the stress concentration is generated at a ridgeline portion that is a corner portion of the substantially rectangular cross section. Thus, it is important to stiffen the ridgeline portion of the shape change portion, that is, the curved ridgeline portion 7a of the curved portion 7 also as a portion that stiffens the curved portion 7.

Thus, in the sub-frame structure 1 according to the present embodiment, similarly to the stiffening part 43 provided in the conventional sub-frame structure 41 (FIG. 7), the suspension arm coupling portion 11 is covered with the local stiffening portion 9a of the stiffening part 9 along an upper surface of each of the side members 3. As a result, an apparent sheet thickness of the suspension arm coupling portions 11 can be increased, and local stiffness can be improved.

Furthermore, the global stiffening portion 9b of the stiffening part 9 covers the curved ridgeline portion 7a of the curved portion 7 from the suspension arm coupling portion 11a to the cross member 5B. As a result, a deformation of the curved portion 7 can be controlled, and the stiffness of the entire sub-frame structure 1 can be improved.

As described above, in the sub-frame structure 1, the stiffening part 9 that integrally covers and stiffens the suspension arm coupling portion 11a and the curved ridgeline portion 7a in the curved portion 7 from the suspension arm coupling portion 11a to the cross member 5 is provided. As a result, it is possible to control the deformation of each of the curved portions 7 in which the side members 3 and the cross member 5 are connected and the stress concentration is likely to be generated, and the deformation in the curved portion is controlled without an increase in the number of parts and a decrease in productivity, and the stiffness of the entire sub-frame structure 1 is improved.

In addition, according to the sub-frame structure 1 according to the present embodiment, improvement in the collision strength, the deformation strength of when the single load is input, and the fatigue strength can be expected.

Furthermore, in the present invention, it is more preferable that the stiffening part 9 is provided in such a manner as to further cover a ridgeline portion 3b on the vehicle exterior side of the side member 3 as in the local stiffening portion 9a illustrated in FIG. 1. As a result, the ridgeline portion 3b on the vehicle exterior side which ridgeline portion is covered with the local stiffening portion 9a and the curved ridgeline portion 7a covered with the global stiffening portion 9b are coupled into a structure that transmits a load, and the stiffening performance of the stiffening part 9 can be improved.

In the present embodiment, since the stiffening part 9 is to improve the stiffness of the sub-frame structure 1, it is not necessary to apply a high-strength metal sheet to the stiffening part 9, and it is sufficient that the stiffening part 9 is a metal sheet having tensile strength of 270 MPa-grade or more.

On the other hand, since the stiffness of the entire sub-frame structure 1 can be improved by provision of the stiffening part 9, the metal sheet can be thinned for the parts other than the stiffening part 9 (side members 3 and cross members 5) from a viewpoint of the stiffness of the entire sub-frame structure 1.

Thus, in order to reduce the weight while maintaining the strength of the sub-frame structure 1, a steel sheet having tensile strength of 590 MPa-grade or more is preferably applied to portions other than the stiffening parts 9 in the sub-frame structure 1.

In the above description, the global stiffening portion 9b of each of the stiffening parts 9 covers the curved ridgeline portion 7a on the vehicle upper side in the curved portion 7. The curved portion 7 is a portion that connects the side member 3 made of the hollow member having the substantially rectangular cross-portion shape and the cross member 5 made of the hollow member having the substantially rectangular cross section shape. Thus, in addition to the curved ridgeline portion 7a on the vehicle upper side, the curved portion 7 may also have, on the vehicle lower side, a curved ridgeline portion that connects the ridgeline portion on the vehicle interior side of the side member 3 and the ridgeline portion on the vehicle front side of the cross member 5.

In such a case, the global stiffening portion of the stiffening part may extend from the local stiffening portion in such a manner as to cover the curved ridgeline portion on the vehicle lower side in the curved portion. That is, the sub-frame structure according to the present invention does not limit the curved ridgeline portion stiffened by the global stiffening portion of the stiffening part, and may stiffen a curved ridgeline portion that can be easily covered by the global stiffening portion.

In addition, although each of the stiffening parts 9 illustrated in FIG. 1 is provided on an outer surface side of the side member 3, the cross member 5, and the curved portion 7 included in the sub-frame structure 1, the stiffening part 9 may be provided on an inner surface side thereof.

The sub-frame structure 1 illustrated in FIG. 1 is a structure in which the suspension arm is coupled to the suspension arm coupling portions 11 provided on an outer surface of each of the side members 3 (surface on the vehicle upper side on the vehicle exterior side). However, in the sub-frame structure according to the present invention, an opening portion may be provided in a side surface on the vehicle exterior side of the side member, and a suspension arm may be inserted into the opening portion and fastened to the side member with a bolt or the like. Even in this case, when the stiffening part having the local stiffening portion covering the suspension arm coupling portion and the global stiffening portion extending from the suspension arm coupling portion and covering the curved ridgeline portion is provided, the deformation of the curved portion is controlled and stiffness is improved.

Although the sub-frame structure 1 according to the present embodiment is manufactured with the side members 3 and the cross members 5 being integrated, the present invention is not limited to what includes integrated side members and cross members.

In addition, although the curved portion 7 is formed in each of the side members 3 in the sub-frame structure 1, a curved portion may be formed on a cross member.

Furthermore, the above description relates to the sub-frame structure 1 in which the pair of right and left side members 3 and the pair of front and rear cross members 5 are connected via the curved portions 7 and formed in the hash shape as illustrated in FIG. 1. However, as illustrated in FIG. 2, the present invention may be a sub-frame structure 21 in which a pair of right and left side members 23 and one cross member 25 are connected via curved portions 27 and formed in an H shape.

In the H-shaped sub-frame structure 21, each of the side members 23 is provided with suspension arm coupling portions 31a and 31b at front and rear two positions in a vehicle longitudinal direction as suspension arm coupling portions 31. In addition, the cross member 25 is arranged near the suspension arm coupling portions 31 to which a suspension arm 33 is coupled in the side member 23.

Then, in the H-shaped sub-frame structure 21, when a load is input from the suspension arm coupling portions 31, stress concentration is generated in each of curved portions 27 that connect the side members 23 and the cross member 25.

Thus, in the H-shaped sub-frame structure 21, a stiffening part 29 that integrally covers the suspension arm coupling portion 31a and a curved ridgeline portion 27a of the curved portion 27 from the suspension arm coupling portion 31 to the cross member 25 is provided.

As a result, in a case where a load is input to the sub-frame structure 21, a deformation in the curved portion 27 can be controlled, and stiffness of the sub-frame structure 21 can be improved.

### <Stiffening part of the sub-frame structure of the automobile>

Although the above description relates to the sub-frame structure 1 provided with the stiffening parts 9, a configuration as the stiffening portions 9 that stiffen the sub-frame structure 1 is possible as another aspect of the present embodiment.

That is, as illustrated in FIG. 1 described above, the stiffening parts 9 of the sub-frame structure of the automobile stiffen the sub-frame structure 1 which includes the side members 3 and the cross members 5, and in which the side members 3 and the cross member 5B are connected via the curved portions 7. Then, the local stiffening portion 9a and the global stiffening portion 9b are integrally formed in each of the stiffening parts 9.

The local stiffening portion 9a covers the suspension arm coupling portion 11a and locally stiffens the suspension arm coupling portion 11a.

The global stiffening portion 9b extends from the local stiffening portion 9a to the cross member 5 along the curved ridgeline portion 7a of the curved portion 7 and covers the curved ridgeline portion 7a, and globally stiffens the sub-frame structure 1.

According to the stiffening part 9, it is possible to control the deformation of the curved portion 7 where the stress concentration is likely to be generated when the load is input to the sub-frame structure 1 and to improve the stiffness of the entire sub-frame structure 1.

As described above, it is more preferable that the local stiffening portion 9a of the stiffening part 9 also covers the ridgeline portion 3b on the vehicle exterior side of the side member 3. As a result, the ridgeline portion 3b on the vehicle exterior side which portion is covered with the local stiffening portion 9a and the curved ridgeline portion 7a covered with the global stiffening portion 9b can be coupled into a structure that transmits the load, and the stiffening performance of the stiffening part 9 is further improved.

### [First example]

An examination for verifying an effect of the sub-frame structure of the automobile according to the present invention has been made, and will be described below.

In the first example, the stiffness of the sub-frame structure of the automobile according to the present invention was examined.

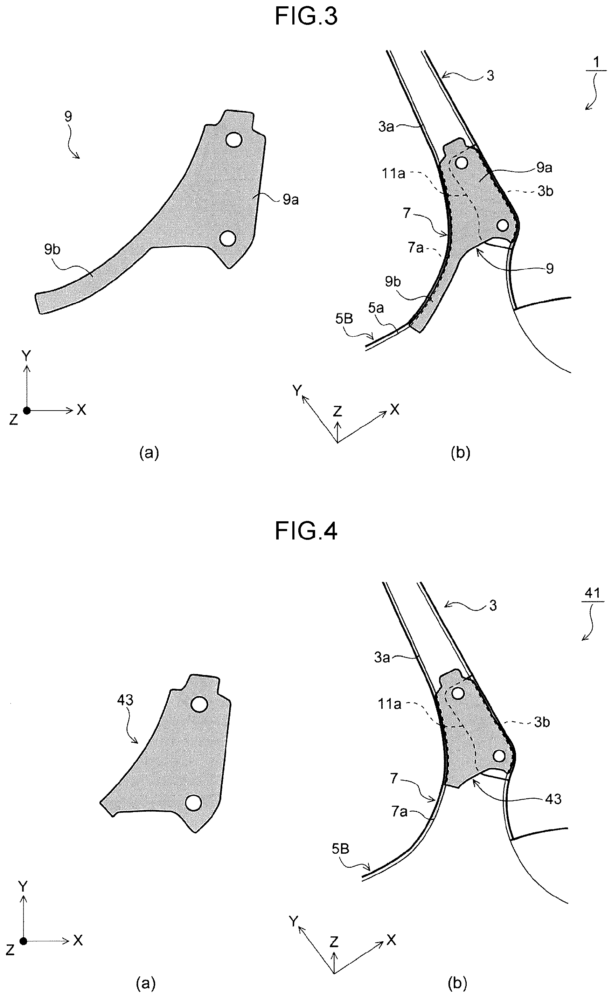

As illustrated in FIG. 1 of the embodiment described above, the sub-frame structure 1 to be examined includes the pair of right and left side members 3 and the pair of front and rear cross members 5, and the side members 3 and the cross member 5B are connected via the curved portions 7. As illustrated in FIG. 1 and FIG. 3, the sub-frame structure 1 is provided with the stiffening parts 9 (first invention example). In FIG. 3, an X-axis direction is a vehicle right direction, a Y-axis direction is a vehicle front direction, and a Z-axis direction is a vehicle upper direction (the same applies to FIG. 4 described later).

As illustrated in FIG. 1, each of the stiffening parts 9 integrally covers and stiffens the suspension arm coupling portion 11a provided on the side member 3 and the curved ridgeline portion 7a of the curved portion 7 from the suspension arm coupling portion 11a to the cross member 5B. As illustrated in FIG. 1 and FIG. 3(a), the stiffening part 9 includes the local stiffening portion 9a and the global stiffening portion 9b.

In the first example, as illustrated in FIG. 1 and FIG. 3(b), the local stiffening portion 9a covers the suspension arm coupling portion 11a and the ridgeline portion on the vehicle exterior side of the side member 3 in the suspension arm coupling portion 11a.

On the other hand, as illustrated in FIG. 1 and FIG. 3(b), the global stiffening portion 9b extends from the local stiffening portion 9a to the cross member 5B along the curved ridgeline portion 7a of the curved portion 7 and covers the curved ridgeline portion 7a.

In the sub-frame structure 1, the side members 3 and the cross members 5 are integrally manufactured by utilization of a steel sheet having a sheet thickness of 2.0 mm and tensile strength of 440 MPa-grade.

The stiffening part 9 was manufactured by utilization of a steel sheet having a sheet thickness of 2.0 mm and tensile strength of 270 MPa-grade. Then, the stiffening part 9 was joined to the sub-frame structure 1 by welding.

In the first example, as a comparison, as illustrated in FIG. 4, the stiffness of the sub-frame structure 41 provided with the conventional stiffening parts 43 that stiffen the suspension arm coupling portions 11 was also examined (conventional example). As illustrated in FIG. 4(a), each of the stiffening parts 43 is not provided with the global stiffening portion 9b of the stiffening part 9 according to the first invention example and has a shape corresponding to the local stiffening portion 9a.

Then, in the sub-frame structure 41 according to the conventional example, the side members 3 and the cross members 5 were manufactured by utilization of a steel sheet having a sheet thickness of 2.0 mm and tensile strength of 270 MPa-grade, similarly to the first invention example.

Similarly to the first invention example, the stiffening part 43 was manufactured by utilization of a steel sheet having a sheet thickness of 2.0 mm and tensile strength of 270 MPa-grade, and was joined to the sub-frame structure 41 by welding.

In the first example, each of the sub-frame structure 1 according to the first invention example and the sub-frame structure 41 according to the conventional example was analyzed by a finite element method of applying a predetermined load, a displacement of a load input point with respect to a unit load was acquired, and a reciprocal thereof was acquired as the stiffness. Then, a stiffness improvement rate in the first invention example based on the stiffness in the conventional example was calculated.

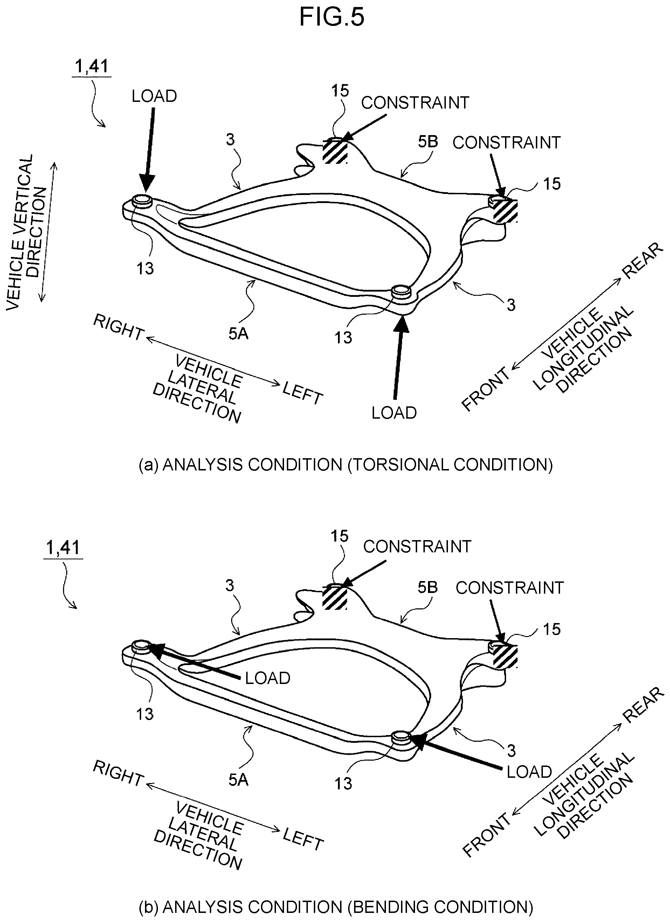

The analysis by the finite element method was performed under two conditions that are a "torsional condition" illustrated in FIG. 5(a) and a "bending condition" illustrated in FIG. 5(b).

The "torsional condition" illustrated in FIG. 5(a) is a condition in which rear bushes 15 that are right and left end portions of the cross member 5B are constrained, and a load (1 kN) is applied to front bushes 13, which are right and left end portions of the cross member 5A, upward and downward in a vehicle vertical direction, respectively.

Then, an analysis was performed under the torsional condition illustrated in FIG. 5(a), and for each of the sub-frame structure 1 according to the first invention example and the sub-frame structure 41 according to the conventional example, a displacement amount in the vehicle vertical direction per unit load in the front bushes 13 of the cross member 5A was acquired as torsional stiffness.

A torsional stiffness improvement rate of the sub-frame structure 1 according to the first invention example was calculated from the torsional stiffness acquired for each of the first invention example and the conventional example. The torsional stiffness improvement rate is an improvement rate of the torsional stiffness of the first invention example based on the torsional stiffness of the conventional example, and was calculated by the following expression. The torsional stiffness improvement rate [%] = (torsional stiffness of the first invention example - torsional stiffness of the conventional example)/(torsional stiffness of the conventional example) ×100

The torsional stiffness improvement rate of the first invention example was 6.2%, and it was indicated that the torsional stiffness was improved as compared with the sub-frame structure 41 according to the conventional example.

The "bending condition" illustrated in FIG. 5(b) is a condition in which the rear bushes 15 that are the right and left end portions of the cross member 5B are constrained and a load (1 kN) is applied to the front bushes 13, which are the right and left end portions of the cross member 5A, rightward in the vehicle lateral direction.

Then, the analysis was performed under the bending condition illustrated in FIG. 5(b), and a displacement amount in the vehicle lateral direction per unit load in the front bushes 13 of the cross member 5A was acquired as bending stiffness for each of the sub-frame structure 1 according to the first invention example and the sub-frame structure 41 according to the conventional example.

A bending stiffness improvement rate of the sub-frame structure 1 according to the first invention example was calculated from the bending stiffness acquired for each of the first invention example and the conventional example. The bending stiffness improvement rate is an improvement rate of the bending stiffness of the first invention example based on the bending stiffness of the conventional example, and was calculated by the following expression. The bending stiffness improvement rate [%] = (bending stiffness of the first invention example - bending stiffness of the conventional example)/(bending stiffness of the conventional example) × 100

The bending stiffness improvement rate of the first invention example was 4.9%, and it was indicated that the bending stiffness was improved as compared with the sub-frame structure 41 according to the conventional example.

### [Second example]

In the second example, a relationship between an improvement in stiffness and an increase in weight in a sub-frame structure of an automobile according to the present invention was examined. In addition, crash worthiness of the sub-frame structure of the automobile according to the present invention was also examined.

In the second example, the same sub-frame structure 1 as in the first example (FIG. 3) was used as an object to be examined.

In the sub-frame structure 1, a sheet thickness of the steel sheet used for the side members 3 and the cross members 5 is changed from 2.0 mm to 1.8 mm in such a manner that the stiffness thereof is equivalent to the stiffness of the above-described sub-frame structure 41 provided with the conventional stiffening parts 43 (FIG. 4). Furthermore, in the sub-frame structure 1, the tensile strength of the steel sheet used for the side members 3 and the cross members 5 was set to 590 MPa-grade (second invention example).

In the second example, first, as in the first example described above, the sub-frame structure 1 according to the second invention example was analyzed by the finite element method under the "torsional condition" and the "bending condition" illustrated in FIG. 5, and each of torsional stiffness and bending stiffness was acquired.

The stiffness (torsional stiffness and bending stiffness) and weight of the sub-frame structure 1 according to the second invention example are illustrated in Table 1 together with results of the stiffness and the weight of the first invention example and the conventional example according to the first example described above.

### [Table 1]

**Table 1**

| | Sub-frame structure | | | | | Weight | | Stiffness improvement rate | | Crash worthiness | | | |
|---|---|---|---|---|---|---|---|---|---|---|---|---|---|
| | Side member/Cross member | | Stiffening part | | | | | | | | | | |
| | Sheet thickness [mm] | Tensile strength [MPa] | Form | Sheet thickness [mm] | Tensile strength [MPa] | [kg] | [%] | Torsion | Bending | Maximum load | | Absorbed energy | |
| | | | | | | | | | | [kN] | [%] | [kJ] | [%] |
| Comparative example | 2.0 | 270 | FIG. 4 | 2.0 | 270 | 20.00 | (Reference) | (Reference) | (Reference) | 180 | (Reference) | 6.5 | (Reference) |
| First invention example | 2.0 | 270 | FIG. 3 | 2.0 | 270 | 20.24 | +1.2 | +6.2 | +4.9 | 181 | +0.6 | 6.6 | +1.5 |
| Second invention example | 1.8 | 590 | FIG. 3 | 2.0 | 270 | 18.31 | -8.5 | ±0.0 | ±0.0 | 185 | +2.8 | 6.8 | +4.6 |

As illustrated in Table 1, the torsional stiffness improvement rate and the bending stiffness improvement rate of the second invention example based on the conventional example were both ±0%, and the stiffness of the sub-frame structure 1 according to the second invention example was equivalent to the stiffness of the sub-frame structure 41 according to the conventional example.

In the sub-frame structure 1 according to the first invention example in which the sheet thickness of the side members 3 and the cross members 5 was equivalent to that in the conventional example, the use of the stiffening parts 9 each of which has the global stiffening portion 9b increased the weight by 1.2% as compared with the sub-frame structure 41 according to the conventional example.

On the other hand, in the sub-frame structure 1 according to the second invention example in which the sheet thickness of the side members 3 and the cross members 5 was reduced, although the same stiffening parts 9 as in the first invention example were used, the weight was reduced by 8.5% as compared with the sub-frame structure 41 according to the conventional example. This shows that the sub-frame structure 1 according to the second invention example is reduced in weight while the stiffness equivalent to that of the sub-frame structure 41 according to the conventional example was maintained.

Subsequently, for the sub-frame structures 1 according to the first invention example and the second invention example and the sub-frame structure 41 according to the conventional example, a crashworthiness analysis on the crash worthiness was performed.

In the crashworthiness analysis, a rigid body wall 51 is caused to crash from the vehicle front side as illustrated in FIG. 6. Then, a constraint condition in which full degrees of freedom of the rear bushes 15 that are the right and left end portions of the cross member 5B are constrained and translational degrees of freedom in a Z-axis direction (vehicle upper direction) of the front bushes 13 that are the right and left end portions of the cross member 5A are constrained is provided.

For each of the sub-frame structures 1 according to the first and second invention examples and the sub-frame structure 41 according to the conventional example, a maximum load generated at the time of the crash of the rigid body wall 51 and absorbed energy in a crash process were calculated by the crashworthiness analysis. Then, for each of the calculated maximum load and absorbed energy, a change rate based on a maximum load or absorbed energy in the conventional example was acquired.

The maximum load and the absorbed energy acquired by the crashworthiness analysis is illustrated in Table 1 described above for each of the first invention example, the second invention example, and the conventional example.

As illustrated in Table 1, the maximum load generated in the sub-frame structure at the time of the crash according to the crashworthiness analysis was +0.6% in the first invention example and +2.8% in the second invention example 2 based on the conventional example, and the both exceeded that in the conventional example. In addition, the crash absorbed energy was +1.5% in the first invention example and +4.6% in the second invention example, and the both were higher than that in the conventional example.

As described above, in the sub-frame structure according to the present invention, it was demonstrated that a weight reduction and an improvement in crash worthiness could be realized while the stiffness was maintained by a reduction of the sheet thickness of the steel sheet in such a manner that the stiffness was equivalent to that of the conventional sub-frame structure and by utilization of the high-strength steel sheet.

### Industrial Applicability

According to the present invention, since the stiffening part that integrally covers and stiffens the suspension arm coupling portion and the curved ridgeline portion of the curved portion is provided, the deformation in the curved portion is controlled without an increase in the number of parts and a decrease in productivity. As a result, the stiffness of the entire sub-frame structure is improved. Furthermore, according to the present invention, collision strength, deformation strength of when a single load is input, and fatigue strength can be improved.

### Reference Signs List

1 SUB-FRAME STRUCTURE
3 SIDE MEMBER
3a RIDGELINE PORTION
3b RIDGELINE PORTION
5 CROSS MEMBER
5A CROSS MEMBER
5B CROSS MEMBER
5a RIDGELINE PORTION
7 CURVED PORTION
7a CURVED RIDGELINE PORTION
9 STIFFENING PART
9a LOCAL STIFFENING PORTION
9b GLOBAL STIFFENING PORTION
11 SUSPENSION ARM COUPLING PORTION
11a SUSPENSION ARM COUPLING PORTION
11b SUSPENSION ARM COUPLING PORTION
13 FRONT BUSH
15 REAR BUSH
21 SUB-FRAME STRUCTURE
23 SIDE MEMBER
25 CROSS MEMBER
27 CURVED PORTION
27a CURVED RIDGELINE PORTION
29 STIFFENING PART
29a LOCAL STIFFENING PORTION
29b GLOBAL STIFFENING PORTION
31 SUSPENSION ARM COUPLING PORTION
31a SUSPENSION ARM COUPLING PORTION
31b SUSPENSION ARM COUPLING PORTION
33 SUSPENSION ARM
41 SUB-FRAME STRUCTURE
43 STIFFENING PART
51 RIGID BODY WALL

## Claims

1. A sub-frame structure of an automobile, comprising:
a pair of right and left vehicle longitudinal direction extension portions each of which includes: a hollow member extending in a vehicle longitudinal direction and having a substantially rectangular cross section; and a suspension arm coupling portion;
at least one vehicle lateral direction extension portion that includes a hollow member extending in a vehicle lateral direction and having a substantially rectangular cross section;
a curved portion configured to connect each of the vehicle longitudinal direction extension portions and the vehicle lateral direction extension portion; and
a stiffening part configured to integrally cover and stiffen the suspension arm coupling portion and a curved ridgeline portion of the curved portion from the suspension arm coupling portion to the vehicle lateral direction extension portion.

2. The sub-frame structure of the automobile according to claim 1, wherein the stiffening part is configured to also cover a ridgeline portion on a vehicle exterior side of each of the vehicle longitudinal direction extension portions in the suspension arm coupling portion.

3. The sub-frame structure of the automobile according to claim 1 or 2, wherein the vehicle longitudinal direction extension portions and the vehicle lateral direction extension portion are made of a steel sheet having tensile strength of 590 MPa-grade or more.

4. A stiffening part for a sub-frame structure of an automobile, the sub-frame structure including: a pair of right and left vehicle longitudinal direction extension portions each of which includes: a hollow member extending in a vehicle longitudinal direction and having a substantially rectangular cross section; and a suspension arm coupling portion; at least one vehicle lateral direction extension portion that includes a hollow member extending in a vehicle lateral direction and having a substantially rectangular cross section; and a curved portion configured to connect each of the vehicle longitudinal direction extension portions and the vehicle lateral direction extension portion, the stiffening part comprising:
a local stiffening portion configured to cover the suspension arm coupling portion and locally stiffen the suspension arm coupling portion; and
a global stiffening portion extending from the local stiffening portion to the vehicle lateral direction extension portion along a curved ridgeline portion of the curved portion and configured to cover the curved ridgeline portion, and globally stiffen the sub-frame structure,
wherein the local stiffening portion and the global stiffening portion are integrally formed.

5. The stiffening part for the sub-frame structure of the automobile according to claim 4, wherein the local stiffening portion is configured to also cover a ridgeline portion on a vehicle exterior side of each of the vehicle longitudinal direction extension portions in the suspension arm coupling portion.
